# DEMANDE DE BREVET EUROPEEN

(11) **EP 4 445 737 A1**
(43) Date de publication de la demande: **16.10.2024**
(21) Numéro de dépôt: 24164391.5
(22) Date de dépôt: 19.03.2024
(51) Int. Cl.: A22C 29/00, A22C 29/04, B23K 26/00

(54) **DISPOSITIF DE MARQUAGE DE COQUILLES DE MOLLUSQUES EN FLUX CONTINU, CHAÎNE D EMBALLAGE CORRESPONDANTE ET PROCÉDÉ DE MARQUAGE DE MOLLUSQUES PAR LA MISE EN UVRE D'UNE TELLE CHAINE**

(30) Priorité: 20.03.2023 FR 2302560
(71) Demandeur: Speciales Gillardeau, 17560 Bourcefranc-Le-Chapus (FR)
(72) Inventeur: GILLARDEAU, Véronique, 17560 BOURCEFRANC-LE-CHAPUS (FR); GILLARDEAU, Thierry, 17560 BOURCEFRANC-LE-CHAPUS (FR)
(74) Mandataire: Casalonga

(57) **Abrégé**

Ce dispositif (1) comprenant un des moyens de gravure (4) aptes à graver une empreinte sur une coquille, et des moyens de commande aptes à commander une gravure de l'empreinte sur la coquille par les moyens de gravure (4), comportant des moyens de détection et localisation (5) d'une coquille couplés aux moyens de commande pour commander ladite gravure.

## Description

### Domaine technique

La présente invention concerne le marquage de mollusques à coquille externe, et plus particulièrement la gravure d'huîtres vivantes dans une chaîne d'emballage.

### Techniques antérieures

Généralement, les seules identifications permettant de renseigner un client sur l'origine d'une huître ou d'un autre mollusque sont celles présentes sur l'étiquette sanitaire ainsi que celles sur l'emballage. Mais il n'existe aucune information sur le produit en tant que tel, c'est-à-dire sur le mollusque.

C'est la raison pour laquelle il a été proposé, dans l'état de la technique, de procéder à un marquage de la coquille externe d'un mollusque au moyen d'un laser. On pourra à cet égard se référer au brevet français FR 3 004 620 qui propose de réaliser une identification systématique de chaque mollusque, en l'espèce de chaque mollusque, par gravure par laser afin de garantir au consommateur final l'origine du produit de manière sûre, mais aussi de protéger le producteur contre d'éventuelles contrefaçons.

Bien qu'avantageuse à moindre égard, la technique d'emballage utilisée dans ce document souffre de certains inconvénients.

En premier lieu, chacun des mollusques doit être positionné dans un logement d'un plateau de chargement d'un convoyeur de transfert avant d'être acheminé vers un graveur pour graver chaque mollusque dans son logement dont la position est connue par le graveur.

La mise en place des mollusques dans chaque logement nécessite des moyens onéreux et chronophages, puisqu'un opérateur et un convoyeur dédiés doivent être adjoints à la chaîne d'emballage.

En second lieu, chaque mollusque dont la coquille vient d'être gravée doit être retiré de son logement pour retourner sur un convoyeur final de la chaîne d'emballage.

Cette opération nécessite également des moyens spécifiques, et entraine des ralentissements dus aux interruptions régulières de la chaîne d'emballage pour le déplacement des mollusques gravés de leur logement vers un autre convoyeur qui est cadencé avec l'arrivée des mollusques non gravés et leur gravure.

L'invention vise donc à résoudre ces divers problèmes et à proposer un dispositif, une chaîne d'emballage et un procédé de marquage améliorés permettant de garantir la continuité des opérations de la chaîne d'emballage et d'éviter les ralentissements engendrés notamment par le cadencement de l'étape de gravure réalisée dans les logements de plateaux de chargement.

### Exposé de l'invention

L'invention a pour but de pallier au moins certains des inconvénients précités et de proposer un dispositif de marquage de mollusques à coquille externe et une chaîne l'emballage qui intègre celle-ci capables de cumuler des avantages de rapidité, simplicité et fiabilité pour leur mise en oeuvre.

Au vu de ce qui précède, l'invention a pour objet un dispositif de marquage de mollusques à coquille externe comprenant des moyens de gravure aptes à graver une empreinte sur une coquille, et des moyens de commande aptes à commander une gravure de l'empreinte sur la coquille par les moyens de gravure, le dispositif comportant des moyens de détection et localisation d'une coquille couplés aux moyens de commande pour commander ladite gravure.

De préférence, le dispositif comporte des moyens de positionnement adaptés pour pouvoir orienter les moyens de gravure par rapport à la localisation de la coquille localisée avant la gravure.

Par exemple, les moyens de positionnement comprennent des moyens de rotation aptes à orienter angulairement les moyens de gravure en direction de chaque coquille sur le convoyeur de transfert.

Avantageusement, les moyens de positionnement comportent des moyens de translation aptes à déplacer les moyens de gravure en regard de chaque coquille sur le convoyeur de transfert.

Selon une forme de réalisation, les moyens de gravure comprennent un laser apte à graver une empreinte sur une coquille de mollusque.

Dans un exemple de réalisation, le laser est un laser à dioxyde de carbone d'une puissance supérieure à deux-cents-cinquante Watts.

L'invention concerne également une chaîne d'emballage de mollusques à coquille externe comportant un unique convoyeur de transfert apte à porter des mollusques et un dispositif de marquage tel que décrit ci-dessus et dans lequel passe ledit convoyeur de transfert, ledit dispositif de marquage étant apte à graver une empreinte sur la coquille de chaque mollusque disposé sur le convoyeur de transfert.

La chaîne d'emballage peut prévoir en outre que le dispositif de gravure soit apte à graver par une empreinte plusieurs mollusques disposés en vrac sur le convoyeur de transfert avec une vitesse d'avancée constante dudit convoyeur de transfert.

L'invention concerne également un procédé pour la mise en oeuvre de la chaîne d'emballage de mollusques à coquille externe, comportant les étapes suivantes :
- une étape de fourniture de mollusques à coquilles sur le convoyeur de transfert ;
- une étape de détection et localisation d'une coquille sur le convoyeur de transfert par les moyens de détection et localisation et de commande de la gravure aux moyens de commande par les moyens de détection et localisation ;
- une étape de gravure de la coquille par les moyens de gravure directement sur le convoyeur de transfert.

De préférence, avant l'étape de gravure, le procédé comporte une étape d'orientation des moyens de gravure par rapport à la localisation de la coquille détectée lors de l'étape de détection et localisation.

### Brève description des dessins

L'invention sera mieux comprise à l'étude détaillée d'un mode de réalisation pris à titre d'exemple non limitatif et illustré par les dessins annexés, sur lesquels :
[Fig 1] représente schématiquement en vue de dessus la chaîne d'emballage de mollusques.
[Fig 2] illustre un organigramme du procédé d'emballage de mollusques selon la mise en oeuvre de l'invention.

### Description détaillée

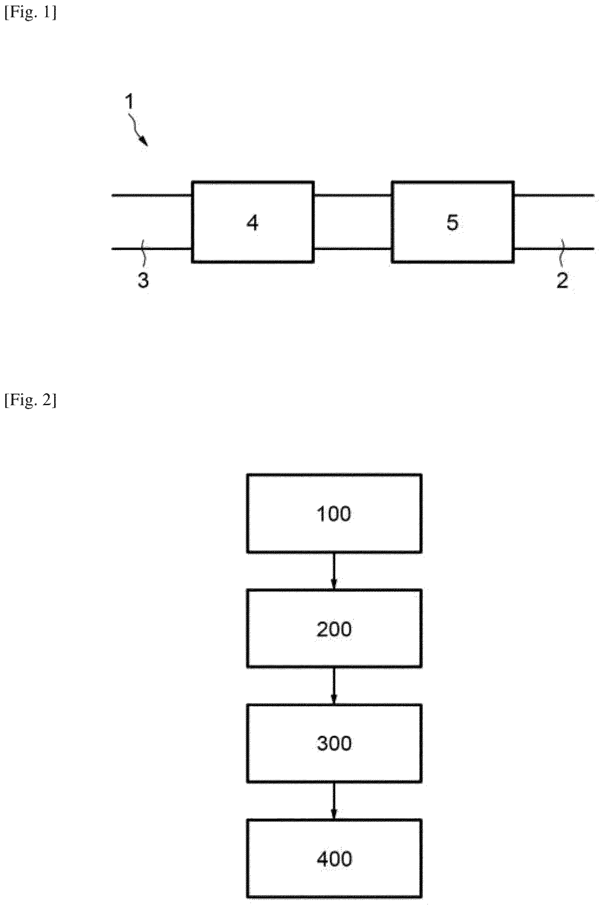

La Figure 1 illustre la chaîne d'emballage de mollusques, qui comporte un dispositif de marquage de mollusques à coquille externe 1.

La chaîne d'emballage comporte le dispositif 1, ainsi qu'un convoyeur de transfert 2,3 qui achemine en amont les mollusques vers le dispositif 1 pour les marquer par gravure.

La chaîne d'emballage peut comporter en outre un convoyeur de sortie 2,3 pour évacuer les mollusques gravés vers une coupelle finale pour leur commercialisation.

Le convoyeur de sortie 2,3, transportant les mollusques en aval, peut être formé au moins partiellement par le convoyeur de transfert 2,3.

Pour le marquage des mollusques, le dispositif 1 a des moyens de gravure 4 aptes à graver une empreinte sur une coquille, et des moyens de commande aptes à commander une gravure de l'empreinte sur la coquille par les moyens de gravure 4.

Contrairement aux systèmes de l'art antérieur, le dispositif 1 comporte, en amont des moyens de gravure 4, des moyens de détection et localisation 5 d'une coquille couplés aux moyens de commande pour commander ladite gravure.

Ces moyens de détection et localisation 5 comportent par exemple un système de caméra fixe capable d'identifier chaque mollusque qui défile sur le tapis, et d'en noter l'emplacement.

Les moyens de détection et localisation 5 permettent de s'affranchir du positionnement des mollusques dans un bac de chargement pour que les moyens de gravure 4 connaissent leur emplacement au moment de leur gravure.

Les moyens de commande donnent des ordres aux moyens de gravure 4 en fonction des informations d'emplacements reçus à partir du système de caméra.

On réalise ainsi un dispositif 1 permettant une gravure dynamique des mollusques arrivant en vrac, c'est-à-dire sans emplacement spécifique, grâce auquel dispositif 1 aucun opérateur n'est nécessaire pour positionner chaque mollusque un à un sur le convoyeur de transfert 2,3.

Outre le gain de temps, cette opération en moins enlève également la nécessité des pinces pour prendre les mollusques qu'utilisent les opérateurs.

Un opérateur peut concentrer son action sur une étape préalable de vérification de la conformité des mollusques partant vers la gravure.

De préférence, le dispositif 1 comporte des moyens de positionnement adaptés pour pouvoir orienter les moyens de gravure 4 par rapport à la localisation de la coquille localisée avant la gravure.

Ainsi, les moyens de gravure 4 ne marquent pas d'arrêt, ce qui permet une gravure des mollusques directement sur le convoyeur de transfert 2,3, même si ceux-ci y sont disposés en vrac.

Par exemple, les moyens de positionnement comprennent des moyens de rotation aptes à orienter angulairement les moyens de gravure 4 en direction de chaque coquille sur le convoyeur de transfert.

Avantageusement, les moyens de positionnement peuvent comporter des moyens de translation aptes à déplacer les moyens de gravure 4 en regard de chaque coquille sur le convoyeur de transfert.

Les moyens de positionnement des moyens de gravure 4 permettent d'éviter le positionnement spécifique des mollusques dans des logements par un opérateur, ce qui évite donc une opération dont la gestuelle est contraignante.

Selon une forme de réalisation, les moyens de gravure 4 comprennent un laser apte à graver une empreinte sur une coquille de mollusque.

Contrairement à l'art antérieur, le dispositif 1 peut ne comporter qu'un unique laser, ce qui simplifie sa conception et diminue son coût de revient.

On peut en alternative utiliser une pluralité de tels lasers.

Dans un mode de réalisation, le laser est un laser à dioxyde de carbone d'une puissance supérieure à deux-cents-cinquante Watts.

L'invention concerne également une chaîne d'emballage de mollusques à coquille externe comportant un unique convoyeur de transfert 2,3 apte à porter des mollusques et un dispositif de marquage 1 tel que décrit ci-dessus dans lequel passe ledit convoyeur de transfert 2,3, ledit dispositif de marquage étant apte à graver une empreinte sur la coquille de chaque mollusque disposé sur le convoyeur de transfert 2,3.

La chaîne d'emballage de mollusques à coquille externe peut prévoir en outre que le dispositif de marquage 1 soit apte à graver par une empreinte plusieurs mollusques disposés en vrac sur le convoyeur de transfert 2,3 avec une vitesse d'avancée constante dudit convoyeur de transfert 2,3.

L'invention concerne également un procédé de marquage de mollusques à coquilles externes pour la mise en oeuvre d'une chaîne d'emballage de mollusques à coquille externe telle que décrite ci-dessus.

Ce procédé est schématisé par la Figure 2 et comporte :
- une étape 100 de fourniture de mollusques à coquilles sur le convoyeur de transfert 2,3 ;
- une étape 200 de détection et localisation d'une coquille sur le convoyeur de transfert 2,3 par les moyens de détection et localisation 5 et de commande de la gravure aux moyens de commande par les moyens de détection et localisation 5 ;
- optionnellement, une étape 300 d'orientation des moyens de gravure 4 par rapport à la localisation de la coquille détectée lors de l'étape 200 de détection et localisation ;
- une étape 400 de gravure de la coquille par les moyens de gravure 4 directement sur le convoyeur de transfert 2,3.

Le procédé peut comporter en outre, avant l'étape de gravure 400, l'étape 300 d'orientation des moyens de gravure 4 par rapport à la localisation de la coquille détectée lors de l'étape 200 de détection et localisation.

On réalise ainsi une chaîne d'emballage permettant un procédé de gravure dynamique dans lequel les mollusques sont déposées en vrac et défilent en continu, sans cadencement, avec la gravure des mollusques au fur et à mesure qu'ils avancent sur le convoyeur de transfert 2,3, ce qui améliore la fluidité et la productivité de la chaîne tout en la rendant moins contraignante pour les opérateurs.

## Revendications

1. Dispositif de marquage de mollusques à coquille externe (1) comprenant des moyens de gravure (4) aptes à graver une empreinte sur une coquille, et des moyens de commande aptes à commander une gravure de l'empreinte sur la coquille par les moyens de gravure (4), **caractérisé en ce qu'**il comporte des moyens de détection et localisation (5) d'une coquille couplés aux moyens de commande pour commander ladite gravure.

2. Dispositif (1) selon la revendication 1, comportant des moyens de positionnement adaptés pour pouvoir orienter les moyens de gravure (4) par rapport à la localisation de la coquille localisée avant la gravure.

3. Dispositif (1) selon la revendication 2, dans lequel les moyens de positionnement comprennent des moyens de rotation aptes à orienter angulairement les moyens de gravure (4) en direction de chaque coquille sur le convoyeur de transfert.

4. Dispositif (1) selon l'une quelconque des revendications 2 et 3, dans lequel les moyens de positionnement comportent des moyens de translation aptes à déplacer les moyens de gravure (4) en regard de chaque coquille sur le convoyeur de transfert.

5. Dispositif (1) selon l'une quelconque des revendications 1 à 4, dans lequel les moyens de gravure (4) comprennent un laser apte à graver une empreinte sur une coquille de mollusque.

6. Dispositif (1) selon la revendication 5, dans lequel le laser est un laser à dioxyde de carbone d'une puissance supérieure à deux-cents-cinquante Watts.

7. Chaîne d'emballage de mollusques à coquille externe, **caractérisée en ce qu'**elle comprend un unique convoyeur de transfert (2,3) apte à porter des mollusques et un dispositif de marquage (1) selon les revendications 1 à 6 dans lequel passe ledit convoyeur de transfert (2,3), ledit dispositif de marquage étant apte à graver une empreinte sur la coquille de chaque mollusque disposé sur le convoyeur de transfert (2,3).

8. Chaîne d'emballage de mollusques à coquille externe selon la revendication 7, dans laquelle le dispositif de marquage (1) est apte à graver par une empreinte plusieurs mollusques disposés en vrac sur le convoyeur de transfert (2,3) avec une vitesse d'avancée constante dudit convoyeur de transfert (2,3).

9. Procédé de marquage de mollusques à coquilles externes pour la mise en oeuvre d'une chaîne d'emballage de mollusques à coquille externe selon l'une quelconque des revendications 7 et 8, comprenant les étapes suivantes :
- une étape (100) de fourniture de mollusques à coquilles sur le convoyeur de transfert (2,3) ;
- une étape (200) de détection et localisation d'une coquille sur le convoyeur de transfert (2,3) par les moyens de détection et localisation (5) et de commande de la gravure aux moyens de commande par les moyens de détection et localisation (5) ;
- une étape (400) de gravure de la coquille par les moyens de gravure (4) directement sur le convoyeur de transfert (2,3).

10. Procédé de marquage selon la revendication 9, comportant en outre, avant l'étape de gravure (400), une étape (300) d'orientation des moyens de gravure (4) par rapport à la localisation de la coquille détectée lors de l'étape (200) de détection et localisation.
